(19) Europäisches Patentamt
European Patent Office
Office européen des brevets

(11) EP 4 793 391 A1

(12) # EUROPEAN PATENT APPLICATION
published in accordance with Art. 153(4) EPC

(43) Date of publication:
**19.08.2026 Bulletin 2026/34**

(21) Application number: **24904179.9**

(22) Date of filing: **05.12.2024**

(51) International Patent Classification (IPC):
***C22C 38/52*** *(2006.01)* ***C21D 8/02*** *(2026.01)*
***C21D 9/46*** *(2006.01)* ***C25B 11/061*** *(2021.01)*

(52) Cooperative Patent Classification (CPC):
**C21D 8/02; C21D 9/46; C22C 38/52; C25B 11/061;**
Y02E 60/36

(86) International application number:
**PCT/KR2024/019876**

(87) International publication number:
**WO 2025/127614 (19.06.2025 Gazette 2025/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.12.2023 KR 20230181512**

(71) Applicant: **POSCO Co., Ltd**
**Gyeongsangbuk-do 37859 (KR)**

(72) Inventors:
- **KIM, Jinsuk**
  **Pohang-si Gyeongsangbuk-do 37671 (KR)**
- **LEE, Munsoo**
  **Pohang-si Gyeongsangbuk-do 37834 (KR)**
- **KIM, Jonghee**
  **Daejeon 34200 (KR)**
- **KWON, Youngjin**
  **Pohang-si Gyeongsangbuk-do 37689 (KR)**

(74) Representative: **Nederlandsch Octrooibureau**
**P.O. Box 29720**
**2502 LS The Hague (NL)**

(54) **NON-COATED AUSTENITIC STEEL SHEET FOR BIPOLAR PLATE FOR ALKALINE WATER ELECTROLYSIS**

(57) According to the present invention, an uncoated austenitic steel sheet for an alkaline water electrolysis separator is provided, comprising, by wt%: C: more than 0% and 0.04% or less, Si: more than 0% and 0.4% or less, Mn: more than 0% and 0.5% or less, Cr: more than 0% and 2.0% or less, Ni: 33% to 40%, Co: more than 0% and 4.0% or less, the balance of Fe and other inevitable impurities, wherein a value of the following Formula (1) is 0.83 or less, a surface roughness Ra value is 0.07 μm to 0.25 μm, and corrosion resistance is excellent in an alkaline environment.

$$\text{Formula (1): } 9.0 - 0.2495 \times Ni + 0.9 \times Cr - 0.005 \times Co$$

(wherein Ni, Cr and Co represent the content (wt%) of each element).

EP 4 793 391 A1

## Description

[Technical Field]

The present invention relates to an austenitic steel sheet for an alkaline water electrolysis separator, having excellent corrosion resistance in an alkaline environment and facilitating hydrogen generation, and a manufacturing method thereof.

[Background Art]

Recently, efforts are underway for using hydrogen, an eco-friendly fuel, for the prevention of global warming. In particular, a water electrolysis method using the electrolysis of water in conjunction with renewable energy is being investigated for hydrogen production. Water electrolysis methods include high-temperature water electrolysis, cation exchange membrane water electrolysis, and alkaline water electrolysis. The generally commercialized method is the alkaline water electrolysis method.

An alkaline water electrolysis apparatus comprises an electrolyte, an anode, a cathode, a separator, a separator plate, and the like. The electrolyte can comprise a strong base solution such as a 25% to 30% KOH solution. Accordingly, a component comprised in the alkaline water electrolysis apparatus must utilize a material having strong corrosion resistance in a strong base solution.

Conventionally, pure Ni metal or Ni-coated stainless steel was applied as a separator utilized in an alkaline water electrolysis apparatus.

However, conventional technology's utilization of expensive Ni reduces price competitiveness. Furthermore, defects in the Ni coating layer cause a reduction in overall cell performance. Additionally, conventional technology's utilization of large-area separators renders coating difficult. An increase in the corrosion resistance of the stainless steel base material also presents a problem of poor coating adhesion.

[Invention]

[Technical Problem]

An object of the present invention for solving the above-described problem is to provide an uncoated austenitic steel sheet exhibiting excellent corrosion resistance and facile hydrogen generation in an alkaline environment, through control of alloy components and surface roughness.

[Technical Solution]

An uncoated austenitic steel sheet for an alkaline water electrolysis separator according to an example of the present invention, comprising, by wt%: C: more than 0% and 0.04% or less, Si: more than 0% and 0.4% or less, Mn: more than 0% and 0.5% or less, Cr: more than 0% and 2.0% or less, Ni: 33% and 40%, Co: more than 0% and 4.0% or less, the balance of Fe and other inevitable impurities, wherein a value of the following Formula (1) is 0.83 or less, a surface roughness Ra value is 0.07 μm to 0.25 μm, and corrosion resistance is excellent in an alkaline environment.

$$\text{Formula (1): } 9.0 - 0.2495 \times Ni + 0.9 \times Cr - 0.005 \times Co$$

(wherein Ni, Cr and Co represent the content (wt%) of each element).

Further, the uncoated austenitic steel sheet according to an example of the present invention, wherein the alkaline environment may have a concentration of [OH-] ions of 0.3 mol to 7.5 mol based on molar concentration.

Furthermore, an uncoated austenitic steel sheet for an alkaline water electrolysis separator according to an example of the present invention may have a current density ratio expressed by the following Formula (2) of 1.9 or less.

Formula (2): current density of the uncoated austenitic steel sheet for an alkaline water electrolysis separator / current density of pure Ni metal.

Furthermore, the uncoated austenitic steel sheet for an alkaline water electrolysis separator according to an example of the present invention may have a surface contact resistance of 40 $m\Omega \cdot cm^2$ or less at a pressure of 25 $N/cm^2$.

Furthermore, in an example of the present invention, an uncoated austenitic steel sheet for an alkaline water

electrolysis separator may have a hydrogen generation amount ratio expressed by the following Formula (3) of less than 1.0.

Formula (3): hydrogen generation amount of the uncoated austenitic steel sheet for an alkaline water electrolysis separator / hydrogen generation amount of pure Ni metal.

A manufacturing method of an uncoated austenitic steel sheet for an alkaline water electrolysis separator according to another example of the present invention, comprises the steps of: preparing a slab comprising, by wt%: C: more than 0% and 0.04% or less, Si: more than 0% and 0.4% or less, Mn: more than 0% and 0.5% or less, Cr: more than 0% and 2.0% or less, Ni: 33% to 40%, Co: more than 0% and 4.0% or less, and the balance of Fe and other inevitable impurities, wherein a value of the following Formula (1) is 0.83 or less; reheating the slab and hot rolling to manufacture a hot-rolled steel sheet; and subjecting the hot-rolled steel sheet to a solution heat treatment:

$$\text{Formula (1): } 9.0 - 0.2495 \times Ni + 0.9 \times Cr - 0.005 \times Co$$

(wherein Ni, Cr and Co represent the content (wt%) of each element).

Furthermore, a manufacturing method of an uncoated austenitic steel sheet for an alkaline water electrolysis separator according to another example of the present invention may further comprise a step of cold rolling and re-solution heat treatment after the step of subjecting to a solution heat treatment.

Also, in the manufacturing method of an uncoated austenitic steel sheet for an alkaline water electrolysis separator according to another example of the present invention, the reheating may be performed at 1150 to 1350°C for 150 to 240 minutes.

Additionally, the manufacturing method of an uncoated austenitic steel sheet for an alkaline water electrolysis separator according to another example of the present invention, wherein the steps of solution heat treatment and re-solution heat treatment may be performed at 800 to 900°C for 100 seconds to 200 seconds.

Furthermore, a manufacturing method of an uncoated austenitic steel sheet for an alkaline water electrolysis separator according to another example of the present invention may further comprise a step of controlling a surface roughness of the steel sheet obtained by the solution heat treatment to Ra: 0.07 μm to 0.25 μm.

[Advantageous Effects]

In an example of the present invention, the uncoated austenitic steel sheet exhibits excellent corrosion resistance in an alkaline environment and facilitates hydrogen generation.

[Modes of the Invention]

Hereinafter, the preferred modes of the present invention are described. However, the modes of the present invention may be modified in various other forms, and the technical spirit of the present invention is not limited to the modes described hereinafter. Further, the modes of the present invention are provided to more completely describe the present invention to a person having ordinary skill in the art.

The terms used in the present invention are used solely to describe specific examples. Accordingly, singular expressions encompass plural expressions, absent clear contextual indication of singularity. Furthermore, it should be noted that terms such as "comprising" or "having" used in the present invention are used to clearly indicate the presence of features, steps, functions, components, or combinations thereof as described in the specification, and are not intended to preliminarily exclude the presence of other features, steps, functions, components, or combinations thereof.

Unless otherwise defined, all terms used in the present invention shall be understood to have the same meaning as commonly understood by one of ordinary skill in the art to which the present invention pertains. Accordingly, unless clearly defined in the present invention, a specific term shall not be construed in an overly ideal or formal sense.

Additionally, terms such as "about" and "substantially" in the present invention are used to mean at or close to the stated numerical value when allowing for manufacturing and material tolerances inherent to the stated meaning, and are used to prevent unscrupulous infringers from unduly exploiting the invention mentioning precise or absolute numerical values to aid understanding of the present invention.

Except for specific statements to the contrary in the present invention, the percentages representing the content of each element are by wt%.

An uncoated austenitic steel sheet for an alkaline water electrolysis separator according to an example of the present invention may comprise, by wt%: C: more than 0% and 0.04% or less, Si: more than 0% and 0.4% or less, Mn: more

than 0% and 0.5% or less, Cr: more than 0% and 2.0% or less, Ni: 33% to 40%, Co: more than 0% and 4.0% or less, the balance of Fe and other inevitable impurities. Hereinafter, the reasons for the numerical limitations of the alloy component contents in the present invention will be described.

The C content is more than 0 wt% and 0.04 wt% or less.

C is an element that degrades the quality of steel by forming carbides, and can be controlled to ultra-low levels through various decarburization processes. However, the progression of an ultra-low decarburization process can increase process costs. In consideration of this, the C content can be more than 0% and 0.04% or less.

The Si content is more than 0% and 0.4% or less.

Si is an essential element added for deoxidation during alloy refining. Therefore, Si addition facilitates deoxidation during refining, thereby reducing oxygen content and providing advantageous inclusion control. However, excessive Si addition can degrade steel quality due to inclusions. Considering this, the Si content is more than 0% and 0.4% or less. Furthermore, specifically, the Si content is 0.1% to 0.3%.

The Mn content is more than 0% and 0.5% or less.

Mn is an effective element for solid solution strengthening and improving hot formability. In particular, Mn, along with Si, can be used as a deoxidizer during alloy refining. However, an excessive Mn content results in the formation of sulfides such as MnS, which can deteriorate corrosion resistance. Considering this, the Mn content may be more than 0% and 0.5% or less. Specifically, the Mn content may be 0.2% to 0.4%.

The Cr content is more than 0% and 2.0% or less.

Chromium (Cr) dissolves at a level of 0V relative to a hydrogen electrode in an alkaline environment. Therefore, the inclusion of Cr can lead to a reduction in corrosion resistance within an alkaline environment. However, Cr stands as an element necessarily added in the stainless steel manufacturing process. The removal of Cr introduced from scrap or other sources may thus incur additional costs. Considering this, the Cr content may be more than 0 wt% and 2.0 wt% or less. Specifically, the Cr content may be 0.02 wt% to 2.0 wt%. Specifically, the Cr content may be 0.02 wt% to 1.5 wt%.

The Ni content is 33% to 40%.

Nickel is an essential element for securing corrosion resistance in an alkaline environment. Consideration of this allows the Ni content to be 33% or more. However, excessive addition of Ni, an expensive element, can reduce price competitiveness. This consideration limits the upper limit for the Ni content to 40%.

The Co content is more than 0% and 4.0% or less.

Co is an element very stable with Ni in an alkaline environment, effective for increasing corrosion resistance. However, Co is an expensive element, and its excessive addition may decrease price competitiveness. Considering this, the Co content may be more than 0% and 4.0% or less. Specifically, the Co content may be 0.01% or more and 4.0% or less, and more specifically, 0.01% or more and 2.0% or less. Specifically, the Co content may be 0.01% to 1.5%.

The balance of the components of the present invention is Fe. However, during a typical manufacturing process, unintended impurities may be inevitably incorporated from raw materials or the surrounding environment. Exclusion of these impurities is not possible. Recognition of these impurities by those skilled in the art of a typical manufacturing process permits omission of specific mention of all contents thereof in the present invention.

An uncoated austenitic steel sheet for an alkaline water electrolysis separator of an example of the present invention has a value of the following Formula (1) of 0.83 or less.

$$\text{Formula (1): } 9.0 - 0.2495 \times \text{Ni} + 0.9 \times \text{Cr} - 0.005 \times \text{Co}$$

(wherein Ni, Cr and Co represent the content (wt%) of each element.)

Ni, Cr, and Co are elements capable of directly affecting corrosion resistance in an alkaline environment. Therefore, the present invention controls a value of Formula (1) for Ni, Cr, and Co to be 0.83 or less, thereby providing an austenitic steel sheet with improved corrosion resistance in an alkaline environment. Specifically, an uncoated austenitic steel sheet for an alkaline water electrolysis separator according to an example of the present invention has a value of Formula (1) of -1 to 0.83, more specifically 0.001 to 0.83, and even more specifically 0.003 to 0.8. Within the range, the uncoated austenitic steel sheet is capable of achieving a current density level equivalent to or improved from pure Ni metal, while further improving alkali resistance and corrosion resistance.

An uncoated austenitic steel sheet for an alkaline water electrolysis separator, according to an example of the present invention, has a surface roughness Ra value of 0.07 μm to 0.25 μm. In the present invention, the surface roughness refers to arithmetic mean roughness (Ra), and furthermore, said surface roughness is the surface roughness in a 90° direction with respect to the cold rolling direction.

A surface roughness less than 0.07 μm leads to a lower hydrogen generation amount compared to pure Ni metal due to an increase in contact resistance. A surface roughness of 0.25 μm or more causes hydrogen adsorption on the separator, thereby inhibiting the hydrogen generation reaction and lowering the hydrogen generation amount.

In an uncoated austenitic steel sheet for an alkaline water electrolysis separator according to an example of the present invention, the alkaline environment may have a concentration of [OH-] ions of 0.3 mol to 7.5 mol based on molar concentration.

According to an example of the present invention, the uncoated austenitic steel sheet for an alkaline water electrolysis separator may have a current density ratio expressed by the following Formula (2) that is 1.9 or less.

current density of the uncoated austenitic steel sheet for an alkaline water electrolysis separator / current density of pure Ni metal. Formula (2):

The current density ratio refers to a value obtained by dividing the current density of the uncoated austenitic steel sheet for an alkaline water electrolysis separator by the current density of pure Ni metal. Therefore, a current density ratio of 1.0 allows for an evaluation of corrosion resistance equivalent to that of pure Ni metal. Meanwhile, stronger corrosion resistance in an alkaline environment can result in a lower current density. Additionally, a current density ratio lower than 1.0 allows for an evaluation of better corrosion resistance than pure Ni metal. In this respect, the lower limit of the current density ratio, expressed by the said Formula (2), can be 0.001, specifically 0.01, more specifically 0.1, and even more specifically 0.5. Within the said range, the uncoated austenitic steel sheet for an alkaline water electrolysis separator according to an example of the present invention can realize more advantageous physical properties for use as a material for water electrolysis cells such as high-temperature water electrolysis, cation exchange membrane water electrolysis, and alkaline water electrolysis. Additionally, along therewith, an increase in productivity and a cost reduction effect for achieving desired physical properties can be further enhanced.

Furthermore, the current density ratio expressed by the Formula (2) is 1.9 or less. Specifically, the current density ratio is 0.001 to 1.9, more specifically, 0.1 to 1.5, more specifically, 0.5 to 1.07, and even more specifically, 0.8 to 1.07.

An uncoated austenitic steel sheet for an alkaline water electrolysis separator of an example of the present invention has a surface contact resistance of 40 $m\Omega \cdot cm^2$ or less at a pressure of 25 $N/cm^2$. Higher surface contact resistance causes hydrogen adsorption on the separator surface, inhibiting the hydrogen generation reaction. The present invention controls the surface contact resistance to be 40 $m\Omega \cdot cm^2$ or less at a pressure of 25 $N/cm^2$, said 40 $m\Omega \cdot cm^2$ being the surface contact resistance of pure Ni.

An uncoated austenitic steel sheet for an alkaline water electrolysis separator according to an example of the present invention may have a hydrogen generation amount ratio expressed by the following Formula (3) that is less than 1.0.

hydrogen generation amount of the uncoated austenitic steel sheet for an alkaline water electrolysis separator/hydrogen generation amount of pure Ni metal. Formula (3):

Meanwhile, the uncoated austenitic steel sheet for an alkaline water electrolysis separator according to an example of the present invention. An absence of a separate coating enables a prevention of cell performance degradation problems attributable to coating layer defects. A non-performance of a large-area coating process provides excellent price competitiveness.

Next, a manufacturing method of an uncoated austenitic steel sheet for an alkaline water electrolysis separator according to an example of the present invention is described.

A manufacturing method of an uncoated austenitic steel sheet for an alkaline water electrolysis separator according to an example of the present invention may comprise the steps of: preparing a slab comprising, by wt%: C: more than 0% and 0.04% or less, Si: more than 0% and 0.4% or less, Mn: more than 0% and 0.5% or less, Cr: more than 0% and 2.0% or less, Ni: 33% to 40%, Co: more than 0% and 4.0% or less, and the balance of Fe and other inevitable impurities, wherein a value of the following Formula (1) is 0.83 or less; reheating the slab and hot rolling to manufacture a hot-rolled steel sheet; and subjecting the hot-rolled steel sheet to a solution heat treatment.

The slab, wherein a value of the following Formula (1) is 0.83 or less.

$$\text{Formula (1): } 9.0 - 0.2495 \times Ni + 0.9 \times Cr - 0.005 \times Co$$

(wherein Ni, Cr and Co represent the content (wt%) of each element.)

Specifically, the value of the said Formula (1) is -1 to 0.83, more specifically 0.001 to 0.83, even more specifically 0.003 to 0.8.

The reasons for the component range of the respective alloy compositions and the numerical limitation of Formula (1) are as set forth above, and a more detailed description of each manufacturing step follows.

After the manufacturing of the slab having the alloy composition and satisfying Formula (1), the slab can be subjected to a series of reheating, hot rolling, and solution heat treatment steps.

Initially, the slab can be reheated at 1150°C to 1350°C for 150 minutes to 240 minutes, followed by hot rolling.

Reheating at 1150°C to 1350°C and hot rolling enable the redissolution of coarse precipitates generated during slab manufacturing and the control of internal grains to an appropriate size.

After hot rolling to manufacture a hot-rolled steel sheet, a solution heat treatment may be performed at 800°C to 900°C for 100 seconds to 200 seconds.

Furthermore, the manufactured hot-rolled steel sheet can be cold rolled to manufacture a final product. After the cold rolling, re-solution heat treatment can be performed at 800°C to 900°C for 100 seconds to 200 seconds.

During cold rolling, surface roughness is controllable based on roll roughness, and the surface roughness (Ra) value of the uncoated austenitic steel sheet can be 0.07 μm to 0.25 μm.

Furthermore, the uncoated austenitic steel sheet has a surface contact resistance of 40 $m\Omega \cdot cm^2$ or less, and a hydrogen generation amount ratio relative to pure Ni metal in an alkaline water electrolysis environment is less than 1.0.

Furthermore, an example manufacturing method of an uncoated austenitic steel sheet for an alkaline water electrolysis separator of the present invention may further comprise a step of controlling a surface roughness of the steel sheet obtained by the solution heat treatment to Ra: 0.07 μm to 0.25 μm.

The manufacturing method of an uncoated austenitic steel sheet for an alkaline water electrolysis separator according to an example of the present invention exhibits excellent productivity and superior price competitiveness due to the non-performance of a separate Ni coating process.

Hereinafter, the present invention is described in more detail through examples. However, the description of these examples merely illustrates the implementation of the present invention, and the present invention is not limited thereby. The scope of the present invention is determined by the matters described in the claims and by matters reasonably inferred therefrom.

{example}

For various alloy composition ranges shown in Table 1 below, manufacturing of slabs having a size of 150x150x280mm occurred by melting in a vacuum melting furnace. Reheating the said slabs at 1240°C and hot rolling to a 3mm thickness manufactured hot-rolled steel sheets. Subjecting the said hot-rolled steel sheets to a solution heat treatment at 850°C manufactured test pieces.

[Table 1]

| Classification | Chemical Composition (wt%) | | | | | |
|---|---|---|---|---|---|---|
| | C | Si | Mn | Cr | Ni | Co |
| Example 1 | 0.01 | 0.1 | 0.15 | 0.02 | 33 | 0.02 |
| Example 2 | 0.01 | 0.1 | 0.15 | 0.12 | 34.7 | 0.01 |
| Example 3 | 0.011 | 0.1 | 0.15 | 0.1 | 36 | 0.01 |
| Example 4 | 0.011 | 0.15 | 0.2 | 0.49 | 36.2 | 0.01 |
| Example 5 | 0.015 | 0.15 | 0.3 | 0.1 | 36.1 | 0.3 |
| Example 6 | 0.02 | 0.16 | 0.35 | 0.1 | 36.3 | 1.0 |
| Example 7 | 0.017 | 0.2 | 0.3 | 0.1 | 36 | 2.0 |
| Example 8 | 0.02 | 0.2 | 0.3 | 2.0 | 40 | 4.0 |
| Example 9 | 0.02 | 0.2 | 0.3 | 2.0 | 40 | 2.0 |
| Comparative Example 1 | 0.015 | 0.1 | 0.15 | **18** | **10** | 0.01 |
| Comparative Example 2 | 0.018 | 0.15 | 0.2 | 0.5 | 33 | 1.0 |
| Comparative Example 3 | 0.03 | 0.2 | 0.18 | 0.97 | 36.2 | 0.01 |
| Comparative Example 4 | 0.025 | 0.23 | 0.3 | 1.98 | 36 | 0.01 |
| Comparative Example 5 | 0.013 | 0.3 | 0.35 | **4.0** | 36 | 0.01 |

Table 2 below presents the value of Formula (1) and the current density ratio. The value of Formula (1) is calculated using the following Formula (1).

$$\text{Formula (1): } 9.0 - 0.2495 \times Ni + 0.9 \times Cr - 0.005 \times Co$$

(wherein Ni, Cr and Co represent the content (wt%) of each element.)

The current density ratio was calculated and expressed as follows.

Formula (2): current density of the uncoated austenitic steel sheet for an alkaline water electrolysis separator / current density of pure Ni metal.

The current density was measured for the specimen and pure Ni metal in a 30% KOH solution by applying a voltage of 0.4V relative to a standard hydrogen electrode for 6 hours.

Meanwhile, a stronger corrosion resistance in an alkaline environment can lead to a lower current density. Furthermore, a current density ratio of 1.0 indicates an equivalent level of corrosion resistance to pure Ni metal, and current density ratios less than 1.0 indicate better corrosion resistance than pure Ni metal.

[Table 2]

| Classification | Formula (1) | Current Density Ratio |
|---|---|---|
| Example 1 | 0.78 | 1.04 |
| Example 2 | 0.45 | 0.97 |
| Example 3 | 0.11 | 0.98 |
| Example 4 | 0.41 | 0.99 |
| Example 5 | 0.08 | 1.0 |
| Example 6 | 0.03 | 0.95 |
| Example 7 | 0.1 | 0.84 |
| Example 8 | 0.8 | 0.99 |
| Example 9 | 0.81 | 1.07 |
| Comparative Example 1 | **22.7** | 48.17 |
| Comparative Example 2 | **1.21** | 1.95 |
| Comparative Example 3 | **0.84** | 2.02 |
| Comparative Example 4 | **1.8** | 2.11 |
| Comparative Example 5 | **3.62** | 3.8 |

Table 2 shows that Examples 1 to 9 satisfied the alloy components, Formula (1), and manufacturing method provided in the present invention. Accordingly, Examples 1 to 9 satisfied a current density ratio of 1.9 or less. That is, Examples 1 to 9 can be evaluated as having improved corrosion resistance in an alkaline environment. However, the Cr content of Comparative Examples 1 and 5 was excessively high, and the Ni content of Comparative Example 1 was excessively low. Accordingly, Comparative Examples 1 and 5 did not satisfy a Formula (1) value of 0.83 or less. Therefore, Comparative Examples 1 and 5 did not satisfy a current density ratio of 1.9 or less. That is, Comparative Examples 1 and 5 had very poor corrosion resistance in an alkaline environment.

Comparative Examples 2 to 4 satisfied the alloy composition; however, a value of Formula (1) was more than 0.83. Therefore, Comparative Examples 2 to 4 failed to satisfy a current density ratio of 0.8 to 1.9 or less. That is, Comparative Examples 2 to 4 exhibited inferior corrosion resistance in an alkaline environment.

Table 3 below presents the contact resistance by surface roughness and the hydrogen generation amount ratio for the example and the comparative example. The contact resistance is a value measured at a pressure of 25 $N/cm^2$ based on pure Ni. The hydrogen generation amount ratio is a value obtained through water electrolysis operation in a water electrolysis device by manufacturing an actual separator, wherein the separator's area was 46 $cm^2$, the operating temperature was 60°C, the applied current was 30A, and the electrolyte was 25 wt% KOH, with evaluation conducted over 100 hours of operation.

The hydrogen generation amount ratio is the ratio of the hydrogen generation amount of the uncoated austenitic

steel sheet for an alkaline water electrolysis separator to the hydrogen generation amount of pure Ni metal under the same conditions.

A surface roughness in a direction 90° to a rolling direction of a cold-rolled steel sheet is determined as an arithmetic mean roughness (Ra) in accordance with JIS B 0601.

[Table 3]

| Classification | C | Si | Mn | Cr | Ni | Co | Ra (μm) | Contact Resistance (mΩ·cm$^2$ ) | Hydrogen Generation Amount Ratio |
|---|---|---|---|---|---|---|---|---|---|
| Comparative Example 1 | 0.01 | 0.1 | 0.15 | 0.02 | 33 | 0.02 | **0.3** | **55** | **0.8** |
| Comparative Example 2 | 0.01 | 0.1 | 0.15 | 0.02 | 33 | 0.02 | **0.25** | 24 | **0.9** |
| Comparative Example 3 | 0.01 | 0.1 | 0.15 | 0.02 | 33 | 0.02 | **0.05** | **57** | **0.95** |
| Example 1 | 0.011 | 0.1 | 0.15 | 0.1 | 36 | 0.01 | 0.2 | 28 | 1 |
| Example 2 | 0.011 | 0.1 | 0.15 | 0.1 | 36 | 0.01 | 0.13 | 34 | 1.2 |
| Comparati ve Example 4 | 0.011 | 0.1 | 0.15 | 0.1 | 36 | 0.01 | **0.04** | **64** | **0.85** |
| Comparative Example 5 | 0.02 | 0.2 | 0.3 | 2 | 40 | 2 | **0.01** | **120** | **0.95** |
| Example 3 | 0.02 | 0.2 | 0.3 | 2 | 40 | 4 | 0.07 | 38 | 1.1 |
| Comparative Example 6 | 0.02 | 0.2 | 0.3 | 2 | 40 | 2 | **0.5** | **72** | **0.75** |

The contact resistance of pure Ni is 40 mΩ·cm$^2$ at a pressure of 25 N/cm$^2$. According to Table 3, a surface roughness of 0.07 μm to 0.25 μm is confirmed to have a lower level of contact resistance than the contact resistance of pure Ni. However, a surface roughness of 0.25 μm or more demonstrates that the generated hydrogen is adsorbed on the separator surface, thereby inhibiting the hydrogen generation reaction and lowering the hydrogen generation amount. Therefore, a surface roughness less than 0.07 μm results in a low hydrogen generation amount due to an increase in contact resistance, while a surface roughness of 0.25 μm or more demonstrates a low hydrogen generation amount due to hydrogen adsorption on the separator, which inhibits the hydrogen generation reaction.

While the foregoing has described exemplary embodiments of the present invention, the present invention is not limited thereto. A person of ordinary skill in the art readily understands that various changes and modifications are possible within the scope and spirit of the claims described hereinafter.

## Claims

1. An uncoated austenitic steel sheet for an alkaline water electrolysis separator, comprising, by wt%: C: more than 0% to 0.04% or less, Si: more than 0% and 0.4% or less, Mn: more than 0% and 0.5% or less, Cr: more than 0% and 2.0% or less, Ni: 33% to 40%, Co: more than 0% and 4.0% or less, the balance of Fe and other inevitable impurities,

   wherein a value of the following Formula (1) is 0.83 or less,
   a surface roughness Ra value is 0.07 μm to 0.25 μm, and
   has corrosion resistance in an alkaline environment:

$$\text{Formula (1): } 9.0 - 0.2495 \times Ni + 0.9 \times Cr - 0.005 \times Co$$

   (wherein Ni, Cr and Co represent the content (wt%) of each element).

2. The uncoated austenitic steel sheet for an alkaline water electrolysis separator of Claim 1, wherein the alkaline environment has a concentration of [OH$^-$] ions of 0.3 mol to 7.5 mol based on molar concentration.

3. The uncoated austenitic steel sheet for an alkaline water electrolysis separator of Claim 1, wherein a current density ratio expressed by the following Formula (2) is 1.9 or less:

   current density of the uncoated austenitic steel sheet for an alkaline water electrolysis separator / current density of pure Ni metal. Formula (2):

**4.** The uncoated austenitic steel sheet for an alkaline water electrolysis separator of Claim 1, wherein a surface contact resistance at a pressure of 25 $N/cm^2$ is 40 $m\Omega \cdot cm^2$ or less.

**5.** The uncoated austenitic steel sheet for an alkaline water electrolysis separator of Claim 1, wherein a hydrogen generation amount ratio expressed by the following Formula (3) is less than 1.0:

hydrogen generation amount of the uncoated austenitic steel sheet for an alkaline water electrolysis separator / hydrogen generation amount of pure Ni metal. Formula (3):

**6.** A manufacturing method of an uncoated austenitic steel sheet for an alkaline water electrolysis separator, comprising the steps of: preparing a slab comprising, by wt%: C: more than 0% and 0.04% or less, Si: more than 0% and 0.4% or less, Mn: more than 0% and 0.5% or less, Cr: more than 0% and 2.0% or less, Ni: 33% to 40%, Co: more than 0% and 4.0% or less, and the balance of Fe and other inevitable impurities, wherein a value of the following Formula (1) is 0.83 or less;

reheating the slab and hot rolling to manufacture a hot-rolled steel sheet; and
subjecting the hot-rolled steel sheet to a solution heat treatment:

$$\text{Formula (1)}: 9.0 - 0.2495 \times Ni + 0.9 \times Cr - 0.005 \times Co$$

(wherein Ni, Cr and Co represent the content (wt%) of each element).

**7.** The manufacturing method of an uncoated austenitic steel sheet for an alkaline water electrolysis separator of Claim 6,
further comprising cold rolling and re-solution heat treatment after the step of subjecting to a solution heat treatment.

**8.** The manufacturing method of an uncoated austenitic steel sheet for an alkaline water electrolysis separator of Claim 6, wherein the reheating is performed at 1150 to 1350°C for 150 to 240 minutes.

**9.** The manufacturing method of an uncoated austenitic steel sheet for an alkaline water electrolysis separator of Claim 6 or Claim 7,
wherein subjecting the solution heat treatment and re-solution heat treatment are performed at 800 to 900°C for 100 seconds to 200 seconds.

**10.** The manufacturing method of an uncoated austenitic steel sheet for an alkaline water electrolysis separator of Claim 7,
further comprising controlling a surface roughness of the steel sheet obtained by the re-solution heat treatment to Ra: 0.07 μm to 0.25 μm.

**INTERNATIONAL SEARCH REPORT**

International application No. **PCT/KR2024/019876**

**A. CLASSIFICATION OF SUBJECT MATTER**

**C22C 38/52**(2006.01)i; **C21D 8/02**(2006.01)i; **C21D 9/46**(2006.01)i; **C25B 11/061**(2021.01)i

According to International Patent Classification (IPC) or to both national classification and IPC

**B. FIELDS SEARCHED**

Minimum documentation searched (classification system followed by classification symbols)

C22C 38/52(2006.01); B32B 15/04(2006.01); C21C 7/00(2006.01); C21D 9/46(2006.01); C22C 38/00(2006.01); C22C 38/08(2006.01); C22C 38/58(2006.01); C23F 1/00(2006.01); H01L 31/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 표면조도(roughness), 니켈(Ni), 크롬(Cr), 망간(Mn), 코발트(Co), 실리콘(Si), 알칼리 수전해(alkaline electrolysis), 용체화(solution treatment)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 09-209176 A (HITACHI METALS LTD.) 12 August 1997 (1997-08-12)<br>See paragraph [0014], claims 1 and 3 and table 1. | 1-5<br>6-10 |
| Y | JP 2019-123895 A (NIPPON STEEL STAINLESS STEEL CORP.) 25 July 2019 (2019-07-25)<br>See paragraphs [0045] and [0049]. | 6-10 |
| A | JP 3316909 B2 (NKK CORP.) 19 August 2002 (2002-08-19)<br>See claim 1. | 1-10 |
| A | JP 2010-538448 A (ARCELORMITTAL - STAINLESS AND NICKEL ALLOYS et al.) 09 December 2010 (2010-12-09)<br>See claims 1 and 3. | 1-10 |

☑ Further documents are listed in the continuation of Box C. ☑ See patent family annex.

* Special categories of cited documents:

"A" document defining the general state of the art which is not considered to be of particular relevance

"D" document cited by the applicant in the international application

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **11 March 2025** | **12 March 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT

International application No.
**PCT/KR2024/019876**

**C. DOCUMENTS CONSIDERED TO BE RELEVANT**

| Category* | Citation of document, with indication, where appropriate, of the relevant passages | Relevant to claim No. |
|---|---|---|
| A | JP 2002-241841 A (IMPHY UGINE PRECISION) 28 August 2002 (2002-08-28) See claim 1. | 1-10 |

Form PCT/ISA/210 (second sheet) (July 2022)

**INTERNATIONAL SEARCH REPORT**
**Information on patent family members**

International application No.
**PCT/KR2024/019876**

| Patent document cited in search report | Publication date (day/month/year) | Patent family member(s) | Publication date (day/month/year) |
|---|---|---|---|
| JP 09-209176 A | 12 August 1997 | JP 3487471 B2 | 19 January 2004 |
| JP 2019-123895 A | 25 July 2019 | CN 111148854 A | 12 May 2020 |
| | | CN 111148854 B | 21 September 2021 |
| | | JP 6547011 B1 | 17 July 2019 |
| | | KR 10-2020-0047631 A | 07 May 2020 |
| | | KR 10-2379904 B1 | 01 April 2022 |
| | | WO 2019-138869 A1 | 18 July 2019 |
| JP 3316909 B2 | 19 August 2002 | JP 06-049598 A | 22 February 1994 |
| JP 2010-538448 A | 09 December 2010 | AU 2008-294609 A1 | 12 March 2009 |
| | | AU 2008-294609 B2 | 13 September 2012 |
| | | BR PI0815837 A2 | 09 January 2018 |
| | | BR PI0815837 B1 | 03 September 2019 |
| | | CA 2698126 A1 | 12 March 2009 |
| | | CA 2698126 C | 09 August 2016 |
| | | CN 101842508 A | 22 September 2010 |
| | | CN 101842508 B | 01 May 2013 |
| | | CN 103397247 A | 20 November 2013 |
| | | CN 103397247 B | 02 September 2015 |
| | | EA 016990 B1 | 30 August 2012 |
| | | EA 201000408 A1 | 29 October 2010 |
| | | EP 2031082 A1 | 04 March 2009 |
| | | EP 2031082 B1 | 03 September 2014 |
| | | ES 2522582 T3 | 17 November 2014 |
| | | HK 1191985 A1 | 08 August 2014 |
| | | IL 205494 A | 29 August 2013 |
| | | JP 5592259 B2 | 17 September 2014 |
| | | KR 10-1537305 B1 | 22 July 2015 |
| | | KR 10-2010-0080506 A | 08 July 2010 |
| | | MY 150031 A | 29 November 2013 |
| | | PL 2031082 T3 | 31 March 2015 |
| | | PT 2031082 E | 04 November 2014 |
| | | US 2010-0269887 A1 | 28 October 2010 |
| | | US 9309592 B2 | 12 April 2016 |
| | | WO 2009-030865 A2 | 12 March 2009 |
| | | WO 2009-030865 A3 | 30 April 2009 |
| | | ZA 201001452 B | 24 November 2010 |
| JP 2002-241841 A | 28 August 2002 | AT E252160 T1 | 15 November 2003 |
| | | BR 0103638 A | 10 September 2002 |
| | | CA 2354901 A1 | 24 July 2002 |
| | | CN 100478457 C | 15 April 2009 |
| | | CN 1367268 A | 04 September 2002 |
| | | CZ 20012990 A3 | 11 September 2002 |
| | | DE 1156126 T1 | 23 May 2002 |
| | | DE 60100966 T2 | 22 July 2004 |
| | | EP 1156126 A1 | 21 November 2001 |
| | | EP 1156126 B1 | 15 October 2003 |
| | | FR 2819825 A1 | 26 July 2002 |
| | | FR 2819825 B1 | 31 October 2003 |
| | | JP 4918199 B2 | 18 April 2012 |
| | | KR 10-0820892 B1 | 10 April 2008 |

Form PCT/ISA/210 (patent family annex) (July 2022)

**INTERNATIONAL SEARCH REPORT**
**Information on patent family members**

International application No.
**PCT/KR2024/019876**

| Patent document cited in search report | Publication date (day/month/year) | Patent family member(s) | Publication date (day/month/year) |
|---|---|---|---|
| | | KR 10-2002-0062792 A | 31 July 2002 |
| | | MX PA01008747 A | 12 August 2004 |
| | | PL 349295 A1 | 29 July 2002 |
| | | RU 2001124851 A | 27 June 2003 |
| | | SG 101471 A1 | 30 January 2004 |
| | | TW 544471 B | 01 August 2003 |
| | | US 2002-0134469 A1 | 26 September 2002 |
| | | US 6605163 B2 | 12 August 2003 |

Form PCT/ISA/210 (patent family annex) (July 2022)